# EUROPEAN PATENT APPLICATION

(11) **EP 4 235 213 A1**
(43) Date of publication of application: **30.08.2023**
(21) Application number: 22879842.7
(22) Date of filing: 17.05.2022
(51) Int. Cl.: G01S 7/481, B25J 11/00

(54) **3D LASER RADAR AND LEGGED ROBOT**

(30) Priority: 15.10.2021 CN 202111204725
(71) Applicant: Hangzhou Yushu Technology Co., Ltd., Hangzhou City, Zhejiang Province 310053 (CN)
(72) Inventor: WANG, Xingxing, Hangzhou, Zhejiang 310053 (CN); BAI, Xiaoyang, Hangzhou, Zhejiang 310053 (CN)
(74) Representative: Cabinet Beau de Loménie
(86) International application number: PCT/CN2022/093199
(87) International publication number: WO 2023/060892

(57) **Abstract**

The present application provides a 3D laser radar and a legged robot. The 3D laser radar includes a vertical scanning unit and a horizontal rotating device. The vertical scanning unit includes a mounting base (1), and a laser receiver (2), a convex lens (3), a laser transmitter (4) and a reflector (5) sequentially provided on the mounting base. The laser receiver (2) is provided at a focus position of the convex lens (3). The laser transmitter (4) is provided on a main optical axis of the convex lens (3). The reflector (5) is rotatably provided on the mounting base (1). A rotation center of the reflector (5) coincides with the main optical axis of the convex lens (3). A laser pulse signal is used to achieve environment scanning in a vertical plane through the rotation of the reflector (5), and achieve 3D environment scanning through the horizontal rotating device.

## Description

### Technical Field

The present application relates to the technical field of laser radar apparatus, in particular to a 3D laser radar and a legged robot.

### Background

At present, laser radar is widely used in fields such as industrial surveying, 3D modeling and autonomous driving. For example, in the application scenario of automatic following, a mobile device transmits a laser beam towards detected objects around and then receives light signals reflected from the detected objects, which are processed to obtain the position information of the detected objects around the mobile device.

However, most of the existing laser radars are 2D laser radars, or although they can scan 3D environments, they have the disadvantages of large scanning blind areas, small scanning angles for a single radar, and limited information about the surrounding environment. Robots need to mount a plurality of radars to achieve a larger scanning angle. In addition, sets of laser transceiver components are used, resulting in high cost.

Further, Chinese patent No. CN110488249A discloses a laser radar device and a mobile robot. The laser radar device includes a laser radar sensor, a rotating platform and a base. The laser radar sensor is provided above the rotating platform. The base is used for carrying the rotating platform. An adjustment device is provided between the laser radar sensor and the rotating platform. The adjustment device is configured to drive the laser radar sensor to rotate around a first axial direction parallel to the rotating platform. By providing the adjustment device between the laser radar sensor and the rotating platform, the laser radar sensor can be adjusted vertically to achieve scanning in a 3D space.

The adjustment device is provided on the rotating platform and includes a gear component and a first driving motor for driving the gear component to rotate. The first driving motor includes a rotating shaft. The first axial direction is parallel to the rotating shaft.

The laser radar device includes a mounting bracket. The laser radar sensor is provided on the mounting bracket. The mounting bracket is provided with a gear matching part that meshes with the gear component.

### Summary

### Technical Problems

In the above technical solution, the driving motor directly drives the laser radar sensor through a gear to perform vertical scanning. However, the laser radar sensor is relatively precise and complex in structure. For some high-frequency situations, the vertical scanning frequency needs to be very high, and many factors such as its rotation life, connection strength, dynamic balance and rotational inertia must be considered. The structure is relatively complex and the requirements on the existing laser radar sensor are high, resulting in high manufacturing cost.

Further, in the above solution, the laser radar sensor is driven to rotate through the gear. However, when the sensor is driven to rotate through the gear, the scanning frequency is very low, it cannot achieve high-frequency scanning, the application range is narrow, and it is not conducive to promotion and use.

### Solutions to Technical Problems

### Technical Solutions

In order to overcome the defects of the existing technology, a first purpose of the present application is to provide a laser transmitter and a reflector. The reflector can reflect a laser pulse signal transmitted by the laser transmitter and rotate back and forth relative to the laser transmitter, thus achieving multi-angle reflection of the laser pulse signal through the rotation of the reflector. At the same time, the 3D laser radar can be applied to high-frequency scanning scenarios, has a wide application range, and can achieve 3D scanning of the environment, thus facilitating promotion and use. The structure is simple and practical. The solution is feasible. The requirements on the existing components such as laser transmitter are low. The manufacturing cost is low.

A second purpose of the present application is to provide a legged robot, which is loaded with the 3D laser radar and can achieve 3D scanning of the environment.

In order to achieve one of the above purposes, the present application adopts the following first technical solution:

A 3D radar, wherein the 3D radar includes a vertical scanning unit and a horizontal rotating device enabling the vertical scanning unit to rotate in a horizontal direction; the vertical scanning unit includes a mounting base, and a laser receiver, a convex lens, a laser transmitter and a reflector sequentially provided on the mounting base, the laser receiver is provided at a focus position of the convex lens, the laser transmitter is provided on a main optical axis of the convex lens, the reflector is rotatably provided on the mounting base, and a rotation center of the reflector coincides with the main optical axis of the convex lens; the laser transmitter transmits a laser pulse signal to achieve surrounding environment scanning in a vertical plane through the rotation of the reflector and achieve 3D environment scanning through the horizontal rotating device provided with a rotating motor.

After continuous exploration and experimentation, in the present application, by assembling the laser transmitter and the reflector, the reflector can reflect the laser pulse signal transmitted by the laser transmitter and rotate back and forth relative to the laser transmitter. Through the rotation of the reflector, it can achieve multi-angle reflection of the laser pulse signal and complete scanning of the surrounding environment. The structure is simple and practical. The solution is feasible. The requirements on the existing components such as laser transmitter are low. It can be applied to high-frequency scanning scenarios. The application scope is wide. The promotion and use are facilitated. The manufacturing cost is low.

Further, the 3D laser radar provided by the present application achieves 2D scanning in a vertical plane of the environment through the vertical scanning unit, and then rotates the vertical scanning unit in the horizontal direction through the horizontal rotating device to achieve 3D scanning of the surrounding environment. The scanning field-of-view angle can exceed 360° * 90°. Only a set of laser transceiver components is used. The structure is simple. The cost is low.

As an exemplary technical measure, the vertical scanning unit further includes a first motor and a first code disk, the first motor drives the reflector to rotate, the first code disk is concentrically and fixedly connected with the reflector, and rotation information of the reflector is acquired through the first code disk.

In the present application, the reflector is directly driven to rotate at high speed through the first motor to achieve high-frequency scanning without influencing high-precision components such as laser transmitter. The solution is simple and feasible.

As an exemplary technical measure, an outer side of the mounting base is fixedly provided with a protective cover, the protective cover is fixedly connected with a lower casing, the mounting base is provided with a visible light transmitter, and visible light transmitted by the visible light transmitter is refracted by the convex lens and is reflected by the reflector (5) to form a specific pattern on the protective cover (16), or penetrates through the protective cover to display or draw a pattern on a surrounding external environment under the help of the horizontal rotating device. The structure can allow the 3D laser radar to project visible light patterns externally, thus helping to display varied information related to the radar itself and the robot. The cost is low. The structure is simple.

As an exemplary technical measure, the horizontal rotating device includes an upper casing rotor, a lower casing and a motor stator fixed in the lower casing, and the mounting base is fixed on the upper casing rotor and rotates with the upper casing rotor. Through the outer rotor motor, the vertical scanning unit can be enabled to rotate in the horizontal direction.

As an exemplary technical measure, a circumference of the upper casing rotor is uniformly provided with through holes along the same circle, and the through holes form a photoelectric code disk to acquire rotation information of the upper casing rotor to acquire horizontal rotation information of the vertical scanning unit.

As an exemplary technical measure, a wireless power transmission module which is hollow is concentrically provided between the upper casing rotor and the lower casing, and the wireless power transmission module supplies power to the laser receiver and the laser transmitter. Due to the relative rotation between the upper casing rotor and the lower casing, when power supply and signal transmission are required, the wireless power transmission module is used for replacing the traditional cable, thus avoiding fatigue damage of the cable in the reciprocating rotation process.

As an exemplary technical measure, a base circuit board is fixedly provided on the lower casing, a wireless signal transmission component is concentrically provided between the upper casing rotor and the lower casing, and the wireless signal transmission component achieves wireless communication through optical communication; the laser transmitter and the laser receiver achieve wireless communication with the base circuit board through the wireless signal transmission component.

As an exemplary technical measure, a heat dissipating fan is fixed coaxial with the first code disk on an output shaft of the first motor. The structure is used for the circulation of airflow inside the laser radar and facilitates the heat dissipation of heating components such as motor. The structure is simple. The cost is low.

As an exemplary technical measure, a magnetic steel sheet is fixedly provided in the upper casing rotor, the axial width of the magnetic steel sheet is greater than the axial width of the motor stator, and an upper edge of the magnetic steel sheet is higher than an upper edge of the motor stator or a lower edge of the magnetic steel sheet is lower than a lower edge of the motor stator. The design of this structure ensures that in the vertical direction, the magnetic steel sheet is staggered by a certain distance from the motor stator and a large axial magnetic tension can be generated between the upper casing rotor and the motor stator, thus making the horizontal rotating device rotate more stably and reliably, and ensuring that the upper casing rotor will not significantly shake with the lower casing in the rotation process.

In order to one of the above purpose, the present application adopts the following second technical solution:

A 3D laser radar, wherein the 3D laser radar includes a laser transmitter capable of transmitting a laser pulse signal, a reflector capable of reflecting light, and a driving source capable of driving the reflector to rotate.

The driving source is provided with a connecting shaft connected with the reflector.

The connecting shaft drives the reflector to rotate back and forth to achieve multi-angle reflection of the laser pulse signal and complete surrounding environment scanning.

After continuous exploration and experimentation, in the present application, by assembling the laser transmitter and the reflector, the reflector can reflect the laser pulse signal transmitted by the laser transmitter and rotate back and forth relative to the laser transmitter. Through the rotation of the reflector, it can achieve multi-angle reflection of the laser pulse signal and complete scanning of the surrounding environment. The structure is simple and practical. The solution is feasible. The requirements on the existing components such as laser transmitter are low. It can be applied to high-frequency scanning scenarios. The application scope is wide. The promotion and use are facilitated. The manufacturing cost is low.

As an exemplary technical measure, the reflector is provided obliquely and adjacent to the laser transmitter, and the reflector and the laser transmitter are assembled at an interval, so as to prevent the laser transmitter from interfering with the moving reflector.

An oblique surface of the reflector intersects with the laser pulse signal of the laser transmitter.

The reflector is a surface polished metal device with reflective performance, glass with a metal plated reflective film, or a metal product with a metal plated reflective film.

The driving source may be a driving motor.

In order to one of the above purpose, the present application adopts the following third technical solution:

A legged robot, wherein the legged robot uses the 3D laser radar to achieve real-time scanning of surrounding environment information.

### Beneficial Effects of the Present Application

### Beneficial Effects

After continuous exploration and experimentation, in the present application, by assembling the laser transmitter and the reflector, the reflector can reflect the laser pulse signal transmitted by the laser transmitter and rotate back and forth relative to the laser transmitter. Through the rotation of the reflector, it can achieve multi-angle reflection of the laser pulse signal and complete scanning of the surrounding environment. The structure is simple and practical. The solution is feasible. The requirements on the existing components such as laser transmitter are low. It can be applied to high-frequency scanning scenarios. The application scope is wide. The promotion and use are facilitated. The manufacturing cost is low.

Further, the 3D laser radar provided by the present application achieves 2D scanning in a vertical plane of the environment through the vertical scanning unit, and then rotates the vertical scanning unit in the horizontal direction through the horizontal rotating device to achieve 3D scanning of the surrounding environment. The scanning field-of-view angle can exceed 360° * 90°. Only a set of laser transceiver components is used. The structure is simple. The cost is low.

Further, the legged robot provided by the present application is loaded with the 3D laser radar, which achieves 2D scanning in a vertical plane of the environment through the vertical scanning unit, and then rotates the vertical scanning unit in the horizontal direction through the horizontal rotating device to achieve 3D scanning of the surrounding environment. The scanning field-of-view angle can exceed 360° * 90°. Only a set of laser transceiver components is used. The structure is simple. The cost is low.

### Brief Description of the Drawings

### Description of the Drawings

FIG. 1 illustrates a schematic diagram of an overall structure according to the present application.
FIG. 2 illustrates a full sectional view according to the present application.
FIG. 3 illustrates an exploded view of a vertical scanning unit according to the present application.
FIG. 4 illustrates an exploded view of a horizontal rotating unit according to the present application.

In the drawings, 1-mounting base; 2-laser receiver; 3-convex lens; 4-laser transmitter; 5-reflector; 6-first motor; 7-first code disk; 8-upper casing rotor; 9-lower casing; 10-motor stator; 11-through hole; 12-wireless power transmission module; 13-base circuit board; 14-visible light transmitter; 15-magnetic steel sheet; 16-protective cover; 17-wireless signal transmission component; 18-laser driving circuit board; 19-horizontal rotating bearing

### Detailed Description of the Embodiments

### Description of the Embodiments

The present application will be further described below in combination with the embodiments with reference to the drawings. It is to be understood that the embodiments or technical features described below may be freely combined to form new embodiments on the premise of not causing any conflict.

It is to be understood that the terms "horizontal", "vertical", "up", "down", and similar expressions used herein are for descriptive purposes only. Unless otherwise defined, all technical and scientific terms used herein have the same meanings as those commonly understood by those skilled in the technical field of the present application. The terms used herein are only for the purpose of describing specific embodiments and are not intended to limit the present application.

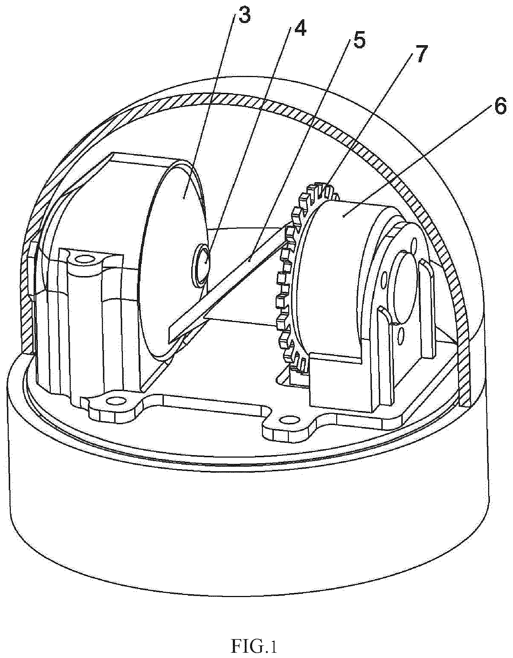

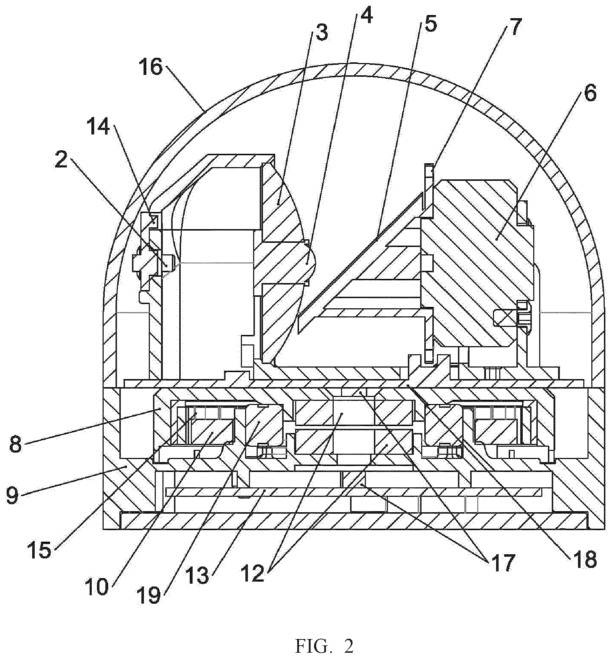

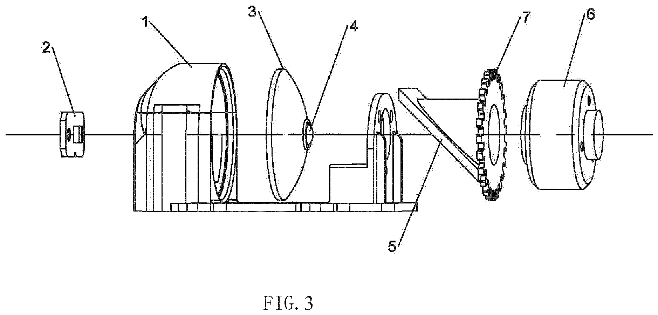

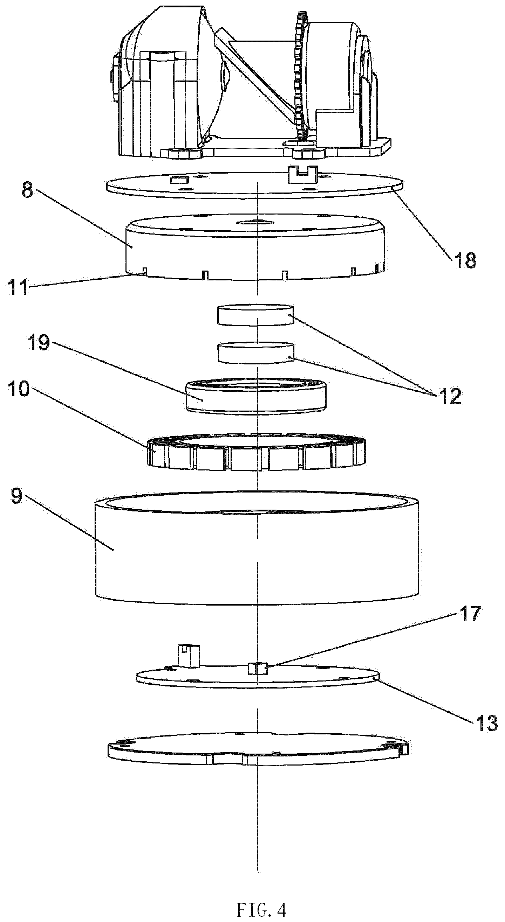

Referring to FIG. 1, FIG. 2, FIG. 3 and FIG. 4, a 3D radar includes a vertical scanning unit and a horizontal rotating device enabling the vertical scanning unit to rotate in a horizontal direction; the vertical scanning unit includes a mounting base 1, and a laser receiver 2, a convex lens 3, a laser transmitter 4 and a reflector 5 sequentially provided on the mounting base 1, the laser receiver 2 is provided at a focus position of the convex lens 3, the laser transmitter 4 is provided on a main optical axis of the convex lens 3, the reflector 5 is rotatably provided on the mounting base 1, and a rotation center of the reflector 5 coincides with the main optical axis of the convex lens 3; the laser transmitter 4 transmits a laser pulse signal to achieve surrounding environment scanning in a vertical plane through the rotation of the reflector 5 and achieve 3D environment scanning through the horizontal rotating device provided with a rotating motor.

After continuous exploration and experimentation, in the present application, by assembling the laser transmitter 4 and the reflector 5, the reflector 5 can reflect the laser pulse signal transmitted by the laser transmitter 4 and rotate back and forth relative to the laser transmitter 4. Through the rotation of the reflector 5, it can achieve multi-angle reflection of the laser pulse signal and complete scanning of the surrounding environment. The structure is simple and practical. The solution is feasible. The requirements on the existing components such as laser transmitter 4 are low. It can be applied to high-frequency scanning scenarios. The application scope is wide. The promotion and use are facilitated. The manufacturing cost is low.

Further, the 3D laser radar provided by the present application achieves 2D scanning in a vertical plane of the environment through the vertical scanning unit, and then rotates the vertical scanning unit in the horizontal direction through the horizontal rotating device to achieve 3D scanning of the surrounding environment. The scanning field-of-view angle can exceed 360° * 90°. Only a set of laser transceiver components is used. The structure is simple. The cost is low.

The reflector 5 is a reflecting mirror. The manufacturing cost is low and it is easy to implement.

An outer side of the mounting base 1 is fixedly provided with a protective cover 16. The protective cover 16 is in an arc-shaped structure and is fixedly connected with a lower casing 9.

Specific embodiment of the vertical scanning unit according to the present application:

The vertical scanning unit further includes a first motor 6 and a first code disk 7. The first motor 6 drives the reflector 5 to rotate. The first code disk 7 is concentrically and fixedly connected with the reflector 5. Rotation information of the reflector 5 is acquired through the first code disk 7.

A heat dissipating fan is fixed coaxial with the first code disk 7 on an output shaft of the first motor 6. The structure is used for the circulation of airflow inside the laser radar and facilitates the heat dissipation of heating components such as motor. The structure is simple. The cost is low.

In the present application, the reflector 5 is directly driven to rotate at high speed through the first motor 6 to achieve high-frequency scanning without influencing high-precision components such as laser transmitter 4. The solution is simple and feasible.

Specific embodiment of visible light transmitter 14 according to the present application:

The mounting base 1 is provided with a visible light transmitter 14. Visible light transmitted by the visible light transmitter 14 is refracted by the convex lens 3 and is further reflected by the reflector 5 to form a specific pattern on the protective cover 16, or penetrates through the protective cover 16 to display or draw a pattern on a surrounding external environment under the help of the horizontal rotating device. The structure can allow the 3D laser radar to project visible light patterns externally, thus helping to display varied information related to the radar itself and the robot. The cost is low. The structure is simple.

Specific embodiment of horizontal rotating device according to the present application:

The horizontal rotating device includes an upper casing rotor 8, a lower casing 9, a motor stator 10 fixed in the lower casing, and a horizontal rotating bearing 19. The mounting base 1 is fixed on the upper casing rotor 8 and rotates with the upper casing rotor 8. Through the outer rotor motor, the vertical scanning unit can be enabled to rotate in the horizontal direction.

An upper end of the upper casing rotor 8 is provided with a laser driving circuit board 18.

Specific embodiment of upper casing rotor 8 according to the present application:

A circumference of the upper casing rotor 8 is uniformly provided with through holes 11 along the same circle. The through holes 11 form a photoelectric code disk to acquire rotation information of the upper casing rotor to acquire horizontal rotation information of the vertical scanning unit.

A magnetic steel sheet 15 is fixedly provided in the upper casing rotor 8. The axial width of the magnetic steel sheet 15 is greater than the axial width of the motor stator 10. An upper edge of the magnetic steel sheet 15 is higher than an upper edge of the motor stator 10.

The design of this structure ensures that in the vertical direction, the magnetic steel sheet 15 is higher than the motor stator 10 by a certain amount and a large axial magnetic tension can be generated between the upper casing rotor 8 and the motor stator 10, thus making the horizontal rotating device rotate more stably and reliably, and ensuring that the upper casing rotor 8 is not separated from the lower casing 9 in the rotation process.

Specific embodiment of wireless power transmission module according to the present application:

A wireless power transmission module 12 which is hollow is concentrically provided between the upper casing rotor 8 and the lower casing 9. The wireless power transmission module 12 supplies power to the laser receiver 2 and the laser transmitter 4. Due to the relative rotation between the upper casing rotor 8 and the lower casing 9, when power supply and signal transmission are required, the wireless power transmission module 12 is used for replacing the traditional cable, thus avoiding fatigue damage of the cable in the reciprocating rotation process.

Specific embodiment of wireless signal transmission structure according to the present application:

A base circuit board 13 is fixedly provided on the lower casing 9. A wireless signal transmission component 17 is concentrically provided between the upper casing rotor 8 and the lower casing 9. The wireless signal transmission component 17 achieves wireless communication through optical communication. The laser transmitter 4 and the laser receiver 2 achieve wireless communication with the base circuit board 13 through the wireless signal transmission component 17.

Embodiment of application of 3D laser radar according to the present application:

A legged robot uses the 3D laser radar to achieve real-time scanning of surrounding environment information.

The legged robot provided by the present application is loaded with the 3D laser radar, which achieves 2D scanning in a vertical plane of the environment through the vertical scanning unit, and then rotates the vertical scanning unit in the horizontal direction through the horizontal rotating device to achieve 3D scanning of the surrounding environment. The scanning field-of-view angle can exceed 360° * 90°. Only a set of laser transceiver components is used. The structure is simple. The cost is low.

Exemplary embodiment of the present application:
A 3D laser radar includes a laser transmitter 4 capable of transmitting a laser pulse signal, a reflector 5 capable of reflecting light, and a driving source capable of driving the reflector 5 to rotate.

The driving source is provided with a connecting shaft connected with the reflector 5.

The connecting shaft drives the reflector 5 to rotate back and forth to achieve multi-angle reflection of the laser pulse signal and complete surrounding environment scanning.

The reflector 5 is provided obliquely and adjacent to the laser transmitter 4. The reflector 5 and the laser transmitter 4 are assembled at an interval, so as to prevent the laser transmitter 4 from interfering with the moving reflector. An oblique surface of the reflector 5 intersects with the laser pulse signal of the laser transmitter 4.

The reflector 5 is a surface polished metal device with reflective performance, glass with a metal plated reflective film, or a metal product with a metal plated reflective film.

The driving source may be a driving motor.

The above embodiments are only exemplary embodiments of the present application and are not intended to limit the scope of protection of the present application. Any non-substantive changes and replacements made by those skilled in the art based on the present application still fall within the scope of protection of the present application.

## Claims

1. A 3D radar, wherein the 3D radar comprises a vertical scanning unit and a horizontal rotating device enabling the vertical scanning unit to rotate in a horizontal direction;
the vertical scanning unit comprises a mounting base (1), and a laser receiver (2), a convex lens (3), a laser transmitter (4) and a reflector (5) sequentially provided on the mounting base (1), the laser receiver (2) is provided at a focus position of the convex lens (3), the laser transmitter (4) is provided on a main optical axis of the convex lens (3), the reflector (5) is rotatably provided on the mounting base (1), and a rotation center of the reflector (5) coincides with the main optical axis of the convex lens (3);
the laser transmitter (4) transmits a laser pulse signal to achieve surrounding environment scanning in a vertical plane through the rotation of the reflector (5) and achieve 3D environment scanning through the horizontal rotating device provided with a rotating motor.

2. The 3D laser radar according to claim 1, wherein the vertical scanning unit further comprises a first motor (6) and a first code disk (7), the first motor (6) drives the reflector (5) to rotate, the first code disk (7) is concentrically and fixedly connected with the reflector (5), and rotation information of the reflector (5) is acquired through the first code disk (7).

3. The 3D laser radar according to claim 2, wherein an outer side of the mounting base (1) is fixedly provided with a protective cover (16), the protective cover (16) is fixedly connected with a lower casing (9), the mounting base (1) is provided with a visible light transmitter (14), and visible light transmitted by the visible light transmitter (14) is refracted by the convex lens (3) and is reflected by the reflector (5) to form a specific pattern on the protective cover (16), or penetrates through the protective cover (16) to display or draw a pattern on a surrounding external environment under the help of the horizontal rotating device.

4. The 3D laser radar according to any one of claims 1-3, wherein the horizontal rotating device comprises an upper casing rotor (8), a lower casing (9) and a motor stator (10) fixed in the lower casing (9), and the mounting base (1) is fixed on the upper casing rotor (8) and rotates with the upper casing rotor (8).

5. The 3D laser radar according to claim 4, wherein a circumference of the upper casing rotor (8) is uniformly provided with through holes (11) along the same circle, and the through holes (11) form a photoelectric code disk to acquire rotation information of the upper casing rotor (8) to acquire horizontal rotation information of the vertical scanning unit.

6. The 3D laser radar according to claim 5, wherein a wireless power transmission module (12) which is hollow is concentrically provided between the upper casing rotor (8) and the lower casing (9), and the wireless power transmission module (12) supplies power to the laser receiver (2) and the laser transmitter (4).

7. The 3D laser radar according to claim 5, wherein a base circuit board (13) is fixedly provided on the lower casing (9), a wireless signal transmission component (17) is concentrically provided between the upper casing rotor (8) and the lower casing (9), and the wireless signal transmission component (17) achieves wireless communication through optical communication; the laser transmitter (4) and the laser receiver (2) achieve wireless communication with the base circuit board (13) through the wireless signal transmission component (17);
a magnetic steel sheet (15) is fixedly provided in the upper casing rotor (8), the axial width of the magnetic steel sheet (15) is greater than the axial width of the motor stator (10), and an upper edge of the magnetic steel sheet (15) is higher than an upper edge of the motor stator (10) or a lower edge of the magnetic steel sheet (15) is lower than a lower edge of the motor stator (10);
a heat dissipating fan is fixed coaxial with the first code disk (7) on an output shaft of the first motor (6).

8. A 3D laser radar, wherein
the 3D laser radar comprises a laser transmitter (4) capable of transmitting a laser pulse signal, a reflector (5) capable of reflecting light, and a driving source capable of driving the reflector (5) to rotate;
the driving source is provided with a connecting shaft connected with the reflector (5), and the connecting shaft drives the reflector (5) to rotate back and forth to achieve multi-angle reflection of the laser pulse signal and complete surrounding environment scanning.

9. The 3D laser radar according to claim 8, wherein
the reflector (5) is provided obliquely and adjacent to the laser transmitter (4), and the reflector (5) and the laser transmitter (4) are assembled at an interval;
an oblique surface of the reflector (5) intersects with the laser pulse signal of the laser transmitter (4);
the reflector (5) is a surface polished metal device with reflective performance, glass with a metal plated reflective film, or a metal product with a metal plated reflective film;
the driving source is a driving motor.

10. A legged robot, wherein the legged robot uses the 3D laser radar according to any one of claims 1-9 to achieve real-time scanning of surrounding environment information.
